Europäisches Patentamt

European Patent Office

Office européen des brevets

(11) Veröffentlichungsnummer : **0 357 861 B1**

(19)

(12) **EUROPÄISCHE PATENTSCHRIFT**

(45) Veröffentlichungstag der Patentschrift :
**22.01.92 Patentblatt 92/04**

(21) Anmeldenummer : **88810610.1**

(22) Anmeldetag : **08.09.88**

(51) Int. Cl.$^5$ : **E06B 3/32**

㊸ **Schrank.**

(43) Veröffentlichungstag der Anmeldung :
**14.03.90 Patentblatt 90/11**

(45) Bekanntmachung des Hinweises auf die
Patenterteilung :
**22.01.92 Patentblatt 92/04**

(84) Benannte Vertragsstaaten :
**AT BE CH DE ES FR GB GR IT LI LU NL SE**

(56) Entgegenhaltungen :
**CH-A- 604 632**
**FR-A- 2 072 287**
**FR-A- 2 369 451**
**GB-A- 837 384**
**US-A- 2 428 220**

(73) Patentinhaber : **JUTZLER AG**
**Bahnhofstrasse**
**CH-3414 Oberburg (CH)**

(72) Erfinder : **Die Erfinder haben auf ihre Nennung**
**verzichtet**

(74) Vertreter : **Tschudi, Lorenz et al**
**Bovard AG Patentanwälte VSP**
**Optingenstrasse 16**
**CH-3000 Bern 25 (CH)**

**Beschreibung**

Die vorliegende Erfindung bezieht sich auf einen Schrank gemäss dem Oberbegriff des Patentanspruches 1 (CH-A-604632), einen Rahmen für einen Schrank sowie auf einen Stollenbefestigungsbeschlag.

Der vorliegenden Erfindung liegt die Aufgabe zugrunde, einen oben angegebenen Schrank derart auszubilden, dass er sowohl mit Schwenk- als auch mit Schiebetüren versehen werden kann, wobei der Schrank auf einfache Art und Weise durch vorzugsweise eine Person umgebaut werden können soll. Durch den beliebigen Wechsel von Schiebe- auf Schwenktüren soll keine Beschädigung des Schrankes erfolgen. Dies wird erfindungsgemäss erzielt durch die kennzeichnenden Merkmale des Patentanspruches 1.

Im weiteren ist es Aufgabe der Erfindung, einen Rahmen zur Befestigung an einem Grundelement oder einem Grundelement und mindestens einem Anbauelement eines Schrankes zu schaffen, welcher Rahmen zur Aufnahme von Schiebetüren dient, wobei der Rahmen auf einfache Art und Weise am Grund- resp. Anbauelement befestigt werden können soll. Dies wird erfindungsgemäss erzielt durch die kennzeichnenden Merkmale des Patentanspruches 2.

Weiterhin ist es eine Aufgabe der vorliegenden Erfindung, ein Verbindungsmittel zum Befestigen des Rahmens an einem Grund- resp. Anbauelement eines Schrankes zu schaffen. Dies wird erfindungsgemäss erzielt durch die kennzeichnenden Merkmale des Patentanspruches 3.

Der erfindungsgemässe Schrank weist einerseits den Vorteil auf, dass die Lagerhaltung für die Einzelteile drastisch reduziert werden kann. Andererseits können auch Elementschränke mit Schiebetüren in beliebiger Grösse zusammengesetzt werden. Im folgenden werden anhand der beiliegenden Zeichnung Ausführungsbeispiele der Erfindung sowie deren Verwendung näher beschrieben. Es zeigen :

**Fig. 1**      eine perspektivische Darstellung des Schrankes mit dem Rahmen für die Schiebetüren,
**Fig. 2**      eine Topfbandbefestigungsplatte zur Befestigung an den Schrankseitenwänden,
**Fig. 3**      einen Stollenbefestigungsbeschlag für einen Rahmen,
**Fig. 4**      einen Querschnitt durch ein erstes Ausführungsbeispiel eines Querträgers des Rahmens,
**Fig. 5**      einen teilweisen Längsschnitt durch den Querträger gemäss Fig. 4,
**Fig. 6**      ein Haltemittel zur Befestigung der Querträger an einem Stollen des Rahmens,
**Fig. 7**      den zusammengebauten Schrank mit unteren und oberen Schiebetüren,
**Fig. 8**      einen Schnitt durch das Grundelement eines Schrankes,
**Fig. 9**      einen Schnitt durch die in das Grundelement einsetzbaren Schwenktüren,
**Fig. 10**     einen Schnitt durch den Rahmen mit den darin eingesetzten Schiebetüren zum Einbau in das Grundelement des Schrankes gemäss Fig. 8,
**Fig. 11**     einen Querschnitt durch ein zweites Ausführungsbeispiel eines oberen Querträgers des Rahmens,
**Fig. 12**     einen Querschnitt durch ein zweites Ausführungsbeispiel eines mittleren Querträgers des Rahmens,
**Fig. 13**     einen Querschnitt durch ein zweites Ausführungsbeispiel eines unteren Querträgers des Rahmens,
**Fig. 14**     eine perspektivische Ansicht eines Stollens mit Befestigungswinkel für einen Querträger sowie eines zweiten Ausführungsbeispiels eines Stollenbefestigungsbeschlages.

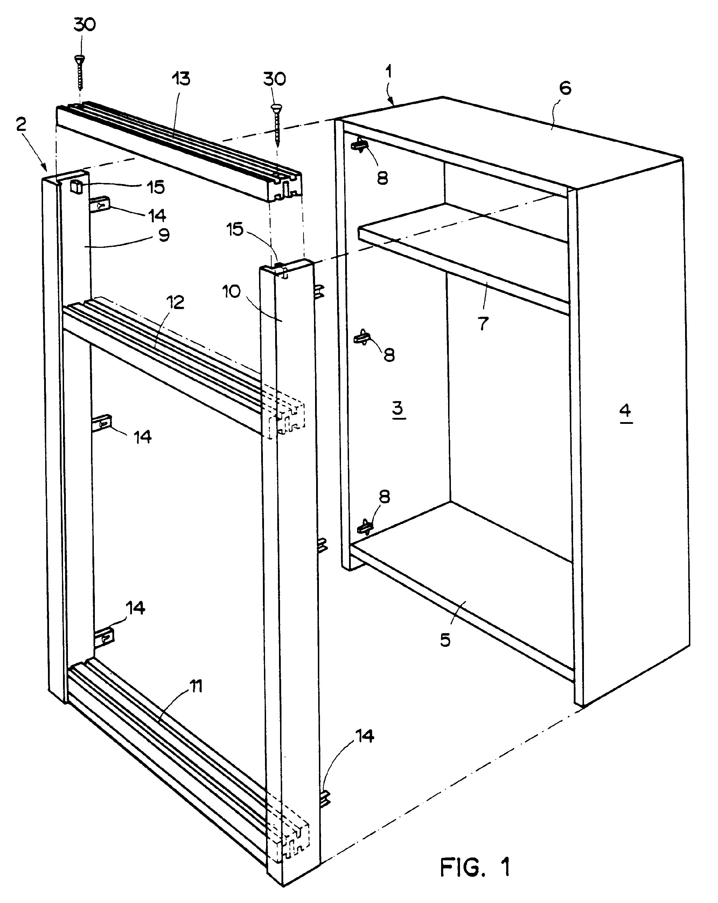

In Fig. 1 ist eine perspektivische Ansicht eines Grundelementes 1 des Schrankes sowie des Rahmens 2 zur Aufnahme der Schiebetüren dargestellt. Das Grundelement umfasst zwei Seitenwände 3, 4 sowie eine Bodenwand 5 und eine Deckwand 6. Im weiteren ist ein zurückversetztes, verstellbares Tablar 7 vorgesehen, welches eine zusätzliche Verstärkungswirkung ausüben kann. An den beiden Seitenwänden 3, 4 sind vorne und übereinander je drei Topfbandbefestigungsplatten 8 angebracht. Der Rahmen 2 umfasst zwei Stollen 9 und 10 sowie einen unteren, einen mittleren und einen oberen Querträger 11, 12, 13. An den Stollen sind den beiden Seitenwänden 3, 4 des Grundelementes zugekehrt, übereinander je drei Stollenbefestigungsbeschläge 14 angebracht. An den Innenseiten der Stollen 9, 10 sind Haltemittel 15 zur Halterung der Querträger 11, 12, 13 an den Stollen angebracht.

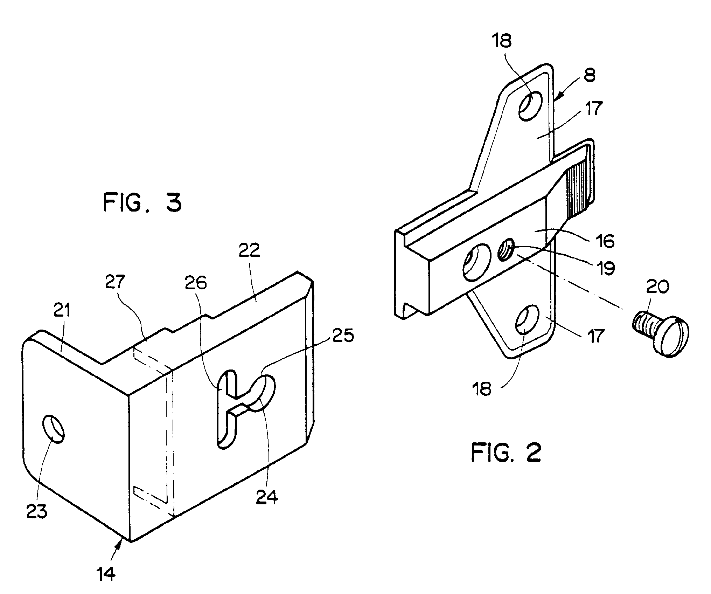

In Fig. 2 ist die Topfbandbefestigungsplatte 8 perspektivisch dargestellt. Sie umfasst einen Mittelteil 16 und zwei von diesem abstehende Schenkel 17 die je ein Befestigungsloch 18 zur Befestigung der Topfbandbefestigungsplatte an den Seitenwänden des Grundelementes aufweisen. Der Mittelteil 16 ist mit einer Bohrung 19 zur Aufnahme einer Befestigungsschraube 20 versehen. Die Befestigungsschraube 20 dient zur Befestigung des Stollenbefestigungsbeschlages an der Topfbandbefestigungsplatte 8.

In Fig. 3 ist der Stollenbefestigungsbeschlag 14 perspektivisch darstellt. Strichpunktiert ist der Querschnitt des Beschlages eingezeichnet. Der Stollenbefestigungsbeschlag 14 umfasst zwei rechtwinklig zueinander abgewinkelte Teile 21, 22. Der Teil 21 ist mit einer Bohrung 23 versehen, welche zur Befestigung des Teils 21 mit einer Schraube und einem Dübel an der Frontseite der Stollen 9 und 10 dient. Der Teil 22 ist mit einer Ausnehmung 24 versehen, welche einen runden Teil 25 sowie einen ovalen Teil 26 umfasst. Der Stollenbefestigungsbeschlag 14 wird mit der Schraube 20 an der Topfbandbefestigungsplatte 8 festgeschraubt, wobei der Kopf der Schraube 20 durch den runden Teil 25 der Ausnehmung 24 hindurchtreten kann, und die Schraube 20 dann im ovalen Teil 26 festgezogen wird. Damit erfolgt die Befestigung des Rahmens 2 am Grundelement 1 oder einem Anbauelement. Mit dem ovalen Teil 26 der Ausnehmung 24 kann noch ein Höhenausgleich des Rahmens 2 in Bezug auf das Grundelement 1 oder das Anbauelement erfolgen. Die Innenseite des Teils 22 ist in drei Bereichen abgestuft ausgebildet, wobei der dem Teil 21 benachbarte Teil 27 in Flucht mit der Seitenwand 3 des Grundelementes oder des Anbauelementes zu liegen kommt. Der mittlere Bereich kommt auf die Schenkel 17 und der schmale Bereich auf den Mittelteil 16 der Topfbandbefestigungsplatte 8 zu liegen.

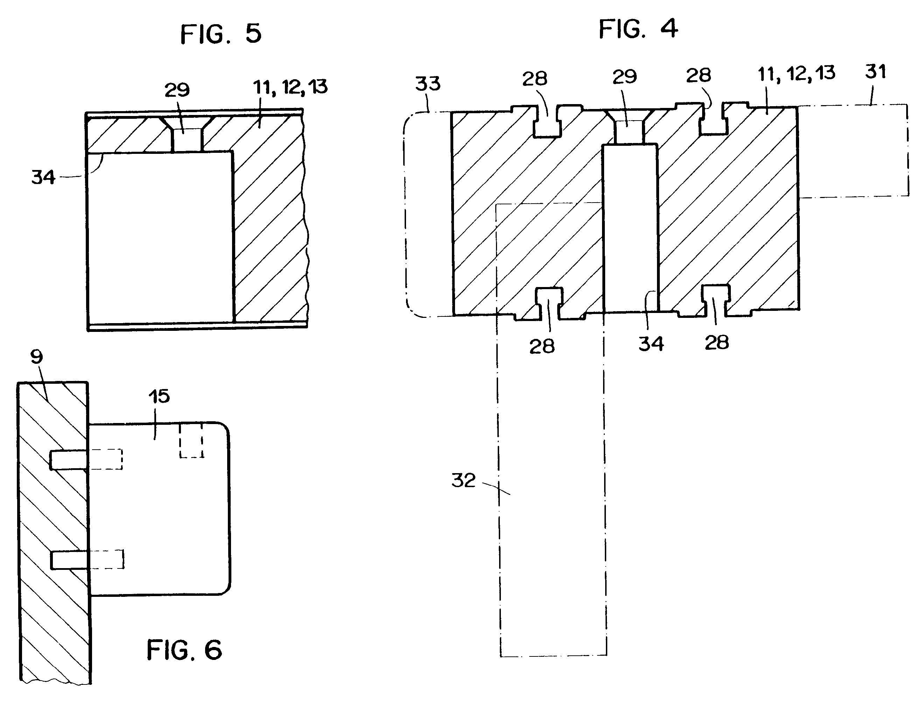

In Fig. 4 ist ein Querschnitt durch den Querträger 11 bzw. 12 oder 13 dargestellt. Der Querträger weist auf beiden Längsseiten je zwei Nuten 28 zur Aufnahme der Schiebetüren auf. Eine Bohrung 29 dient zur Aufnahme der Befestigungsschrauben 30, mit welchen der Querträger an den Haltemitteln 15 festgeschraubt werden kann. Der mittlere Querträger kann mit einer in Fig. 4 strichpunktiert eingezeichneten Tablarleiste 31 versehen sein, welche an das in der Tiefe zurückversetzte Tablar 7 des Grundelementes anschliesst. Die Tablarleiste 31 kann mit Schrauben oder einem Schnappverschluss am Querträger 12 befestigt werden. Der unterste Querträger 11 kann noch mit einer in Fig. 4 strichpunktiert eingezeichneten Fussleiste 32 versehen werden. Dazu müsste eine Ausnehmung im Querträger 11 vorgesehen sein. Die Querträger 11, 12, 13 können an ihrer vom Grundelement 1 abgekehrten Seite noch mit einer Abdeckung 33 versehen werden, welche Abdeckung dann vorzugsweise die gleiche Farbe aufweist, wie das Grundelement 1.

In Fig. 5 ist ein teilweiser Längsschnitt durch den Querträger 11, 12, 13 dargestellt. Der Querträger weist eine Ausnehmung 34 auf, welche über das Haltemittel 15 gelegt wird.

In Fig. 6 ist eine Ansicht des an einen Längspfosten 9 des Schrankes befestigten Haltemittels 15 für den Querträger 11, 12, 13 dargestellt.

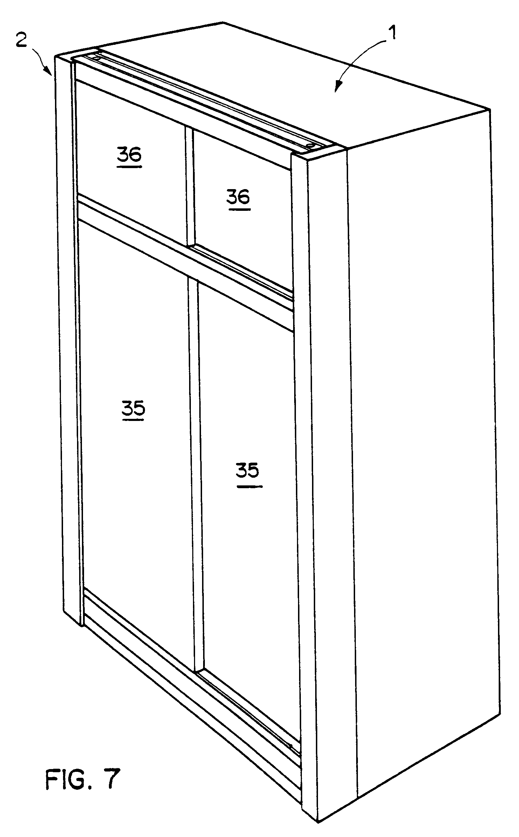

Aus Fig. 7 ist der aus dem Grundelement 1 und dem Rahmen 2 zusammengesetzte Schrank ersichtlich. In den Rahmen sind zwei untere Schiebetüren 35 sowie zwei obere Schiebetüren 36 eingesetzt. Der Schrank könnte auch mit in der Höhe durchgehenden Türen konstruiert werden.

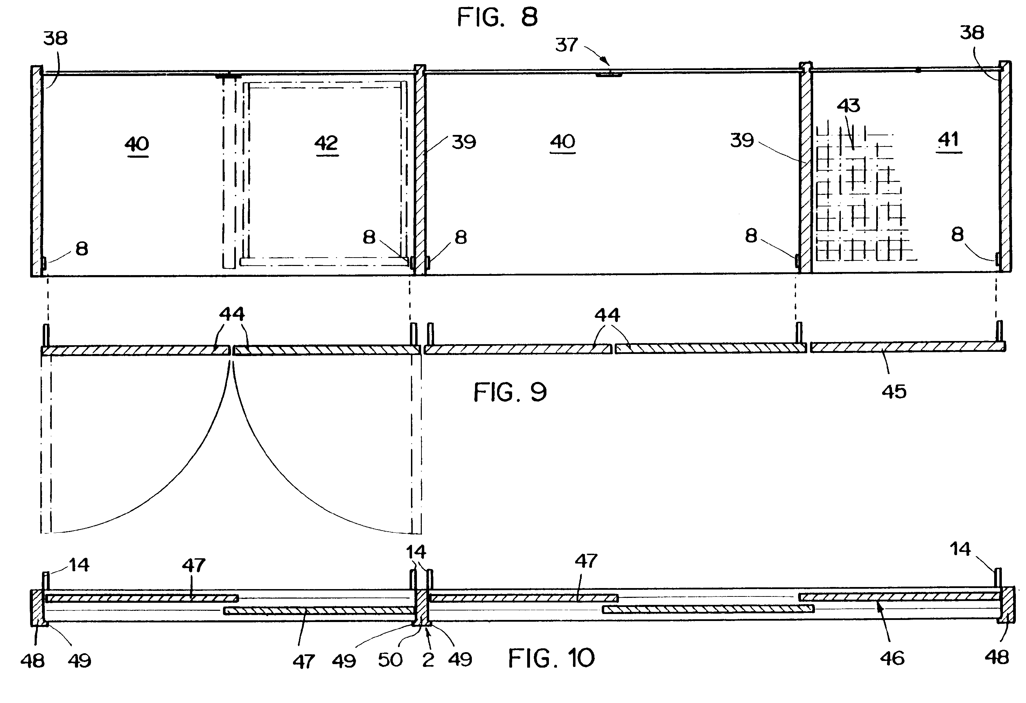

In Fig. 8 ist ein Längsschnitt durch einen Schrank 37 mit einem zweiteiligen Grundelement, einem zwei- und einem einteiligen Anbauelement dargestellt. Neben den Aussenwänden 38 sind zwei Innenwände 39 vorgesehen, welche den Schrank in zwei Doppelteile 40 sowie einen einfachen Teil 41 unterteilen. Herkömmliche Innenschubladen 42 sowie Schiebekörbe 43 usw. können wie in Fig. 8 strichpunktiert eingezeichnet, sowohl bei der Variante mit Schwenktüren als auch bei der Variante mit Schiebetüren verwendet werden.

In Fig. 9 ist ein Längsschnitt durch am Schrank 37 befestigbare Schwenktüren dargestellt. Es sind zwei Doppelschwenktüren 44 sowie eine einfache Schwenktüre 45 vorgesehen.

In Fig. 10 ist ein Längsschnitt durch den Rahmen 46 mit eingesetzten Schiebetüren 47 dargestellt. Er umfasst zwei aussenliegende Stollen 48, welche einen einfachen Abdeckfalz 49 aufweisen sowie einen mittleren Stollen 50, welcher zwei Abdeckfalze 49 aufweist. Der Rahmen wird mit den Stollenbefestigungsbeschlägen 14 an den Topfbandbefestigungsplatten 8, welche an den Seitenwänden 38 und 39 des Schrankes 37 angebracht sind, befestigt. Der Rahmen 46 ist aus einem zweiteiligen Grundrahmen und aus einem dreiteiligen Anbaurahmen zusammengesetzt. Der Vorteil des erfindungsgemässen Rahmens liegt darin, dass auch Element-Schiebetürschränke zusammengesetzt werden können. Der kombinierte Rahmen 46 gemäss Fig. 10 könnte noch beliebig erweitert werden.

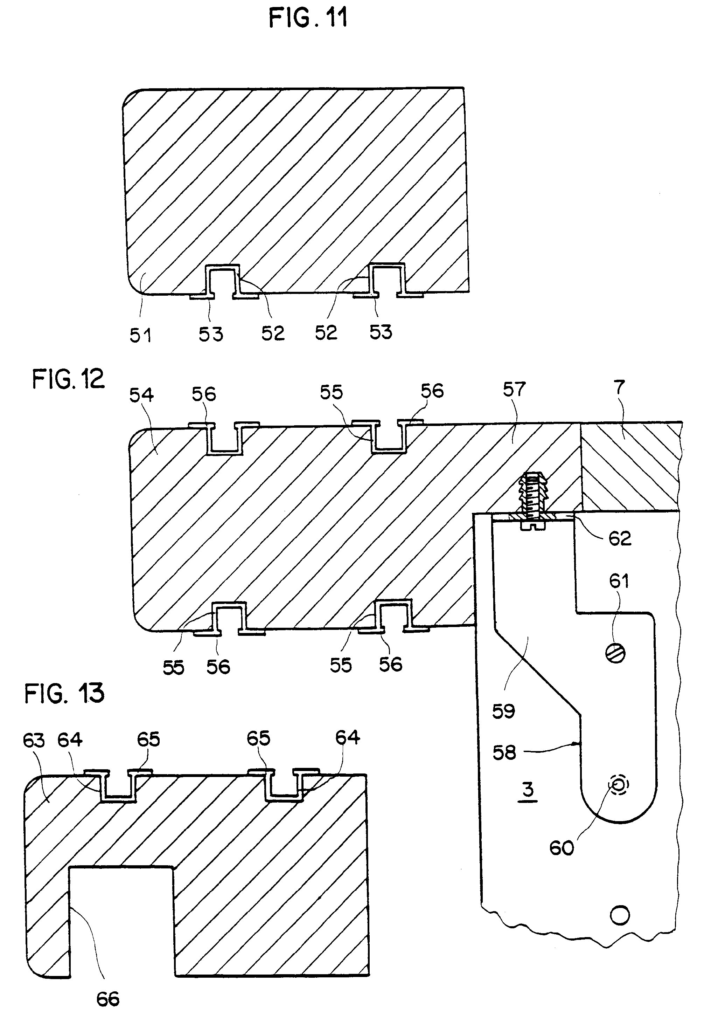

In den Fig. 11, 12 und 13 sind weitere Ausführungsformen von Querträgern dargestellt, wobei im Gegensatz zur ersten Ausführungsform der obere, mittlere und untere Querträger unterschiedlich ausgebildet sind.

In Fig. 11 ist ein Querschnitt durch den oberen Querträger 51 dargestellt. Auf seiner Unterseite sind zwei Längsnuten 52 vorgesehen, wobei in die Nuten je eine Kunststoffschiene 53 zur Führung der Schiebetüren eingelassen ist.

In Fig. 12 ist ein Querschnitt durch den mittleren Querträger 54 dargestellt. Dieser weist auf der Ober- und Unterseite je zwei Nuten 55 auf, wobei in die Nuten ebenfalls Kunststoffschienen 56 zur Führung der Schiebetüren eingelassen sind. Der mittlere Querträger 54 weist noch einen Ansatz 57 auf, der an das in der Tiefe zurückversetzte Tablar 7 eines Grund- oder Anbauelementes anschliesst. Bei den drei- und viertürigen Elementen wird der mittlere Querträger durch einen Beschlag 58 zusätzlich abgestützt, damit der Quertäger 54 durch das Gewicht der oberen Schiebetüren nicht durchgebogen wird. Der Beschlag weist einen vertikalen Teil 59 mit einem Stift 60 und einer Schraube 61 zur Befestigung desselben an einer Schrankseitenwand 3 sowie einen horizontalen Teil 62 zur Befestigung desselben mit einer Schraube und einem Dübel am Ansatz 57 auf. Ein ähnlicher Beschlag wie der Beschlag 58 kann beispielsweise bei drei- und viertürigen Elementen auch zur Abstützung des oberen Querträgers 51 verwendet werden.

Aus Fig. 13 ist ein Querschnitt durch den unteren Querträger 63 ersichtlich, welcher an seiner Oberseite ebenfalls längsverlaufende Nuten 64 aufweist. In die Nuten sind ebenfalls Kunststoffschienen 65 zur Führung der Schiebetüren eingelassen. An der Unterseite ist eine Oeffnung 66 vorgesehen, in welche eine Fussleiste eingesetzt werden kann.

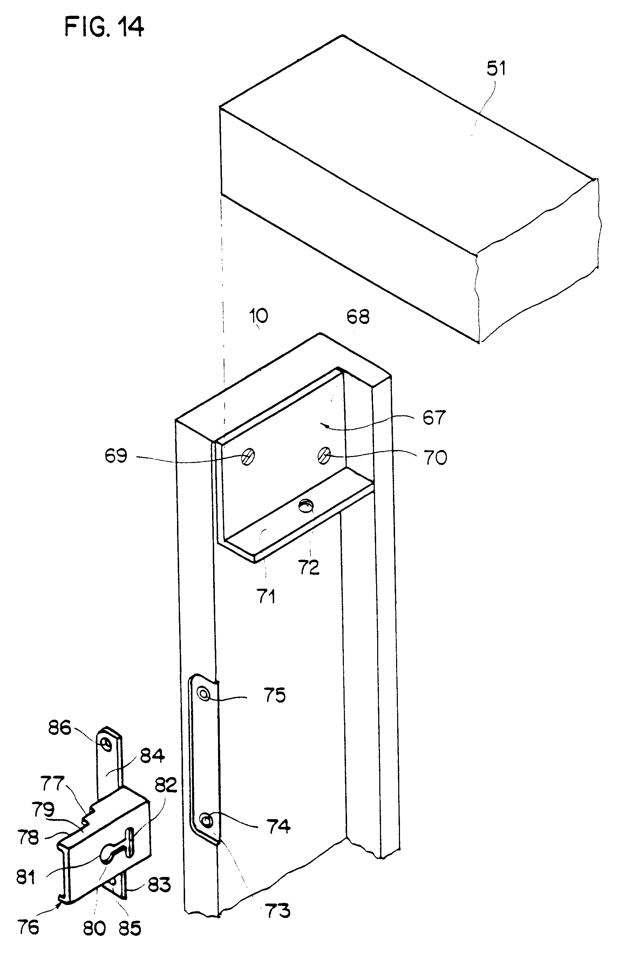

Aus Fig. 14 ist eine perspektivische Ansicht eines Stollens mit Befestigungswinkel für einen Querträger sowie eines zweiten Ausführungsbeispiels eines Stollenbefestigungsbeschlages ersichtlich. Am oberen Ende des Stollens 10 ist ein Befestigungswinkel 67 für den oberen Querträger 51 mit in seinem vertikalen Teil 68 eingelassenen Schrauben 69 und 70 in im Stollen 10 montierte Plastikdübel eingeschraubt. Der untere Teil 71 des Befestigungswinkels 67 ist rechtwinklig umgebogen und steht horizontal vom vertikalen Teil 68 ab. In den horizontalen Teil 71 ist ein Loch 72 zwecks Einführens einer Schraube zur Befestigung des Querträgers 51 am Befestigungswinkel 67 eingelassen. Unterhalb des Befestigungswinkels 67 ist in der Frontseite des Stollens 10 eine Ausnehmung 73 ausgefräst, wobei unten und oben in der Ausnehmung je ein Plastikdübel 74 resp. 75 in den Stollen 10 eingelassen ist. Ein Stollenbefestigungsbeschlag 76 weist einen zum Uebergreifen über die Topfbandbefestigungsplatte 8 bestimmten, mit Abstufungen 77 und 78 versehenen Teil 79 auf. Der Teil 79 ist mit einer Ausnehmung 80 versehen, welche einen runden Teil 81 sowie einen daran anschliessenden ovalen Teil 82 aufweist. An der Stirnseite des Teiles 79 sind zwei Ansätze 83 und 84 zur Befestigung des Stollenbefestigungsbeschlages am Stollen vorgesehen. An den beiden äussern Enden dieser Ansätze 83 und 84 ist je ein Loch 85 resp. 86 zur Aufnahme einer Schraube vorgesehen. Die Schrauben werden in die innerhalb der Ausnehmung 73 angebrachten Plastikdübel 74 und 75 eingeschraubt. Die Montage des Stollenbefestigungsbeschlages 76 an der Topfbandbefestigungsplatte 8 erfolgt wie bei Fig. 3 beschrieben. Der Stollenbefestigungsbeschlag 76 ist vorzugsweise einstückig ausgebildet.

## Patentansprüche

1. Schrank mit einem mindestens zwei Seitenwände (3, 4 ; 38, 39), einen Boden (5) und eine Deckwand (6) aufweisenden Grundelement (1) oder Grundelement und mindestens einem Anbauelement und wenigstens zwei Türen (35, 36) zum Abschliessen der Frontöffnung des Grundelementes oder Grundelementes und mindestens eines Anbauelementes, wobei die Türen wahlweise Schwenk- oder Schiebetüren (44, 45 ; 35, 36, 47) sind, dadurch gekennzeichnet, dass auf der Innenseite und benachbart zur genannten Frontöffnung mindestens zwei Topfbandbefestigungsplatten (8) zur Befestigung von Schwenk- oder Schiebetüren an jeder Seitenwand (3, 4 ; 38, 39) angeordnet sind, dass Mittel (14) zum beweglichen mittelbaren oder unmittelbaren Verbinden der ausgewählten Türen mit den Seitenwänden vorhanden sind und dass die Verbindungsmittel (14) zum Zusammenwirken mit den genannten Topfbandbefestigungsplatten (8) ausgebildet sind.

2. Rahmen zur Aufnahme von Schiebetüren für einen Schrank nach Patentanspruch 1, dadurch gekennzeichnet, dass er mindestens zwei Stollen (9, 10 ; 48, 50), mindestens zwei Querträger (11, 12, 13) sowie Stollenbefestigungsbeschläge (14) zum Verbinden des Rahmens mit einem Grundelement (1) oder einem Grundelement und mindestens einem Anbauelement umfasst.

3. Stollenbefestigungsbeschlag für einen Rahmen nach Patentanspruch 2, dadurch gekennzeichnet, dass er zwei zueinander abgewinkelte, Teile (79, 83, 84) umfasst, wobei in einem ersten Teil (83, 84) zwei Ansätze (83, 84) mit je einer Bohrung (85, 86) zum Befestigen des Stollenbefestigungsbeschlages am Rahmen (2) und in einem zweiten Teil (79) eine Ausnehmung (80) zum Befestigen des zweiten Teiles an Topfbandbefestigungsplatten (8) eines Grundelementes (1) oder eines Anbauelementes vorgesehen sind.

4. Stollenbefestigungsbeschlag nach Patentanspruch 3 dadurch gekennzeichnet, dass die Ausnehmung (80) einen runden Teil (81) sowie einen ovalen Teil (82) umfasst.

5. Stollenbefestigungsbeschlag nach Patentanspruch 3 oder 4, dadurch gekennzeichnet, dass der zweite Teil (79) auf einer Seite abgestuft (77, 78) ausgebildet ist.

## Claims

1. Cabinet with a basic element (1) having at least two side walls (3, 4 ; 38, 39), a floor (5) and a top wall (6) or basic element and at least one add-on element and at least two doors (35, 36) to close the front opening of the basic element or of the basic element and at least one add-on element, the doors being selectively pivoting or sliding doors (44, 45 ; 35, 36, 47), characterized in that on the inside and adjacent to the said front opening, at least two fixation plates (8) are disposed to fix pivoting or sliding doors to each side wall (3, 4 ; 38, 39), in that there are means (14) for directly or indirectly movably connecting the chosen doors with the side walls and in that the connecting means (14) are designed to cooperate with the said fixation plates (8).

2. Frame to take up sliding doors for a cabinet according to claim 1, characterized in that it comprises at least two studs (9, 10 ; 48, 50), at least two cross-supports (11, 12, 13) and stud fixation fittings (14) to connect the frame with a basic element (1) or with a basic element and at least one add-on element.

3. Stud fixation fitting for a frame according to claim 3, characterized in that it comprises two parts at an angle to each other (79, 83, 84), there being provided in a first part (83, 84) two projections (83, 84) each with a bore (85, 86) to affix the stud fixation fitting to the frame (2) and in a second part (79) a recess (80) to affix the second part to fixation plates (8) of a basic element (1) or of an add-on element.

4. Stud fixation fitting according to claim 3, characterized in that the recess (80) comprises a round part (81) and an oval part (82).

5. Stud fixation fitting according to claim 3 or 4, characterized in that the second part (79) is tapered on one side (77, 78).

**Revendications**

1. Armoire comprenant un élément de base (1) avec au moins deux parois latérales (3, 4 ; 38, 39), un fond (5) et une paroi de couverture (6), ou comprenant un élément de base, au moins un élément ajouté et au moins deux portes (35, 36) pour fermer l'ouverture frontale de l'élément de base, ou comprenant un élément de base et au moins un élément ajouté, les portes étant à choix rabattables ou coulissantes (44, 45 ; 35, 36, 47), caractérisée en ce que, du côté intérieur et au voisinage de ladite ouverture frontale, se trouvent disposées au moins deux plaques de fixation du type bande et pot (8) pour la fixation de portes rabattables ou coulissantes à chaque paroi latérale (3, 4 ; 38, 39), en ce que des moyens (14) sont prévus pour la liaison mobile, directe ou indirecte, des portes choisies aux parois latérales, et en ce que les moyens de liaison (14) sont configurés pour coopérer avec lesdites plaques de fixation bande/pot (8).

2. Cadre pour la réception de portes coulissantes pour une armoire selon la revendication 1, caractérisé en ce qu'il comprend au moins deux montants (9, 10 ; 48, 50), au moins deux traverses (11, 12, 13) de même que des garnitures de fixation de montants (14) pour la liaison du cadre avec un élément de base (1), ou en ce qu'il comprend un élément de base et au moins un élément ajouté.

3. Garniture de fixation de montant pour un cadre selon la revendication 2, caractérisée en ce qu'elle comprend deux parties (79, 83, 84) qui sont repliées l'une vers l'autre, deux projections (83, 84) étant prévues dans une première partie (83, 84), chacune avec un perçage (85, 86) pour la fixation au cadre (2) de la garniture de fixation de montant, tandis que dans une seconde partie (79) se trouve une fenêtre (80) pour la fixation de cette deuxième partie aux plaques de fixation bande/pot (8) d'un élément de base (1) ou d'un élément ajouté.

4. Garniture de fixation de montant selon la revendication 3, caractérisée en ce que la fenêtre (80) comprend une partie ronde (81) de même qu'une partie ovale (82).

5. Garniture de fixation de montant selon la revendication 3 ou 4, caractérisée en ce que la seconde partie (79) est formée en gradins (77, 78) d'un côté.

FIG. 1

FIG. 3

18

8

17

16

19

20

17

18

25

24

22

27

26

21

23

14

FIG. 2

FIG. 4

FIG. 5

FIG. 6

FIG. 7

FIG. 8

FIG. 9

FIG. 10

EP 0 357 861 B1

# FIG. 11

51  53  52  52  53

# FIG. 12

54  56  55  56  57  7

55  56  55  56

62

61

59

58

3

60

# FIG. 13

63  64  65  65  64

66

FIG. 14